# EUROPÄISCHE PATENTSCHRIFT

(11) **EP 4 490 462 B1**
(45) Veröffentlichungstag und Bekanntmachung des Hinweises auf die Patenterteilung: **07.10.2026**
(21) Anmeldenummer: 23709964.3
(22) Anmeldetag: 06.03.2023
(51) Int. Cl.: F27B 14/06, F27B 14/20, F27D 19/00, F27D 21/02

(54) **VORRICHTUNG ZUR ÜBERWACHUNG EINER VORRICHTUNG ZUR INDUKTIVEN ERWÄRMUNG EINES METALLWERKSTOFFS, VERFAHREN ZUM AUTOMATISCHEN BELADEN UND STEUERUNGSSYSTEM**
APPARATUS FOR MONITORING AN APPARATUS FOR THE INDUCTIVE HEATING OF A METAL MATERIAL, METHOD FOR AUTOMATIC LOADING, AND CONTROL SYSTEM
DISPOSITIF DE SURVEILLANCE D'UN DISPOSITIF DE CHAUFFAGE PAR INDUCTION D'UN MATÉRIAU MÉTALLIQUE, PROCÉDÉ DE CHARGEMENT AUTOMATIQUE ET SYSTÈME DE COMMANDE

(30) Priorität: 09.03.2022 DE 102022105538
(43) Veröffentlichungstag der Anmeldung: 15.01.2025
(73) Patentinhaber: Otto Junker GmbH, 52152 Simmerath/Lammersdorf (DE)
(72) Erfinder: DAHMEN, Christof, 52223 Stolberg (DE); SCHMITZ, Wilfried, 52249 Eschweiler (DE)
(74) Vertreter: Cohausz & Florack
(86) Internationale Anmeldenummer: PCT/EP2023/055559
(87) Internationale Veröffentlichungsnummer: WO 2023/169981

(56) Entgegenhaltungen:
- WO-A1-2021/182218
- DE-A1- 4 329 509
- KR-A- 20130 104 273
- US-A1- 2020 340 071

## Beschreibung

Die Erfindung betrifft eine Vorrichtung zur Überwachung einer Vorrichtung zur induktiven Erwärmung eines Metallwerkstoffs mit einer Erfassungseinrichtung und mit einer Auswertungseinrichtung, sowie ein Verfahren zum automatischen Beladen einer Vorrichtung zur induktiven Erwärmung eines Metallwerkstoffs. Darüber hinaus betrifft die Erfindung ein Steuerungssystem für eine Vorrichtung zur induktiven Erwärmung eines Metallwerkstoffs mit einer Vorrichtung der eingangs genannten Art und mit einer Regelungseinheit.

Metallwerkstoffe können unter anderem durch Schmelzen verarbeitet werden. So ist es zum Beispiel üblich, Eisen und Zuschlagstoffe zu schmelzen, um Gusseisen mit einer bestimmten Legierung herzustellen. Ein gängiges Mittel, um ein Metallwerkstoff kontrolliert zu schmelzen ist das induktive Erwärmen, insbesondere unter Verwendung eines Induktionstiegelofens. Ein klassischer Induktionstiegelofen weist einen als Tiegel ausgebildeten Aufnahmeraum zur Aufnahme eines zu schmelzenden Metallwerkstoffs und eine Spule, auch Induktor genannt, auf, die von einem Wechselstrom durchflossen werden kann. Der Wechselstrom verursacht ein elektromagnetisches Feld im Inneren der Spule, das wiederum Wirbelströme in einem vom Tiegel aufgenommenen Metallwerkstoff verursacht. Diese Wirbelströme entstehen aufgrund der elektrischen Leitfähigkeit des Metallwerkstoffs und führen nach dem Jouleschen Gesetz zu einer Erwärmung, und somit auch zum Aufschmelzen des Metallwerkstoffs.

In der Regel wird ein zu schmelzendes Material in Form von sogenanntem Schüttgut, zum Bespiel als lose Schrottstücke oder größere Materialklötze in den Aufnahmeraum des Induktionstiegelofens eingefüllt. Das Schüttgut kann vor dem Einfüllen getrocknet worden sein. Je nach Packungsdichte, die das Schüttgut aufweist, wird das Volumen des Aufnahmeraums zumindest teilweise gefüllt. Da das Schüttgut noch nicht geschmolzen ist, wird das maximale Aufnahmegewicht des Induktionstiegelofens nicht erreicht. So kann zum Beispiel ein Induktionstiegelofen ein maximales Aufnahmegewicht von ca. 8 Tonnen haben, und der Aufnahmeraum zunächst mit zum Beispiel ca. 2 Tonnen Schüttgut aufgefüllt werden. Durch Energiezufuhr über die Spule schmilzt das Schüttgut und der Füllstand bzw. die Höhe, bis zu der der Aufnahmeraum mit Schüttgut aufgefüllt ist, sinkt ab.

Mit dem Absinken des Füllstands soll der Aufnahmeraum dann mit weiterem Schüttgut nachgefüllt werden, das dann wiederum schmilzt. Dies wird bis zum Erreichen des maximalen, meistens durch den Ofenhersteller empfohlenen Aufnahmegewichts des Induktionstiegelofens wiederholt. Für dieses Nachfüllen des Aufnahmeraums ist es bekannt, einen Chargierwagen, der mit einer Menge an Schüttgut beladen ist, die dem maximalen Aufnahmegewicht des Induktionstiegelofens entspricht, an den Induktionstiegelofen heranzufahren. Ein Beobachten des tatsächlichen Füllstandes des Induktionstiegelofens und entsprechendes Übertragen einer geeigneten Menge an Schüttgut von dem Chargierwagen in den Aufnahmeraum des Induktionstiegelofens wird in der Regel durch einen Menschen durchgeführt.

So steht in der Regel eine Person neben dem Induktionstiegelofen und steuert das Chargieren in dessen unmittelbarer Nähe, wo hohe Temperaturen herrschen. Daher ist ein derartiges, menschliches Steuern des Chargierens relativ gefährlich.

KR2013 0104273 A offenbart einen Metallschrottförderer mit Rückkopplungsregelung, der die quantitative Zufuhr von Metallschrott in den Tiegel anhand des Wasserstands im flüssigen Metall steuert. Die zugehörige Zuführeinheit regelt die Schrottmenge basierend auf den Wasserstandsdaten. Die Sensoren messen Änderungen des flüssigen Metallstands mittels Laserbestrahlung, Ultraschall oder Kamera.

Im Rahmen der Erfindung wird mit den Begriffen "Füllen" bzw. "Befüllen" eine Steigerung der Menge eines durch den Aufnahmeraum einer Vorrichtung zur induktiven Erwärmung aufgenommenen Guts verstanden, ohne dass es sich dabei zwangsläufig um ein vollständiges Füllen des Aufnahmeraums handelt. Somit kann der Aufnahmeraum bei einem Füllvorgang eine beliebige Menge an Metallwerkstoff aufnehmen, vom Leerzustand bis zum vollständig aufgefüllten Zustand des Aufnahmeraums.

Darüber hinaus kann es beim Chargieren eines Induktionstiegelofens vorkommen, dass sich der zu schmelzende Metallwerkstoff verhakt bzw. verklebt, nicht nachsackt, und somit ein bestimmungsgemäßes Absinken des Füllstandes gestört wird. Dies kann zum Beispiel in dem Fall vorkommen, wenn eine erstarrte, nichtmetallische Begleitphase bzw. "Schlacke" auf der Schmelze erstarrt und/oder in Kontakt mit dem nachgefüllten, noch festen Metallwerkstoff "einfriert". Dann bildet das verhakte bzw. verklebte Material eine Schicht auf dem geschmolzenen Metallwerkstoff, die sich in der Hinsicht ihrer Packungsdichte und/oder Zusammensetzung vom restlichen, durch die Vorrichtung zur induktiven Erwärmung aufgenommenen Material unterscheidet.

Eine derartige Schicht trennt den unterhalb der Schicht angeordneten, zumindest teilweise bereits geschmolzenen Metallwerkstoff vom oberhalb der Schicht hinzugefügten, noch festen Metallwerkstoff. Es kann vorkommen, dass sich zwischen der Schmelze und der Schicht ein Luftpolster und somit eine thermische Barriere zwischen Schmelze und nachgefülltem, noch zu schmelzendem Werkstoff bildet. Dadurch ist der obere, noch feste Metallwerkstoff von der unteren Schmelze zumindest teilweise thermisch isoliert und schmilzt vergleichsmäßig langsam.

Dieses Schichtsystem wird im Fachjargon als "Brücke" und dessen Entstehung als "Brückenbildung" bezeichnet.

Liegt die Brücke oberhalb des Bereichs des Aufnahmeraums der Vorrichtung zur induktiven Erwärmung, an dem die Spule direkt anliegt, dann erfolgt ein Schmelzen der Brücke noch langsamer und die durch die Spule induzierte Leistung erreicht nur noch den bereits geschmolzenen Metallwerkstoff unterhalb der Brücke. Dies kann zu einer starken Überhitzung der Schmelze sowie einem schnellen Auswaschen/Verschleiß des Feuerfestmaterials des Aufnahmeraums der Vorrichtung zur induktiven Erwärmung, sogar bis zu dessen Zerstörung, führen. Verschließt die Brücke den Aufnahmeraum der Vorrichtung zur induktiven Erwärmung luftdicht und trennt die Schmelze vollständig von der Umgebung, dann können gefährliche Gase wie Kohlenmonoxid (z.B. durch den Kontakt mit der SiO₂-Feuerfestauskleidung) nicht mehr entweichen. Außerdem kann eine zusätzliche temperaturbedingte Ausdehnung der Schmelze den Druck unter der Brücke ansteigen lassen. Entspannt sich der Druck schlagartig, zum Beispiel durch einen Versuch, die Brücke mechanisch oder mit einer Sauerstofflanze zu öffnen, kann es zu einer Explosion kommen.

Damit stellt das Phänomen Brückenbildung - wenn zu spät erkannt - ein hohes sicherheitstechnisches sowie wirtschaftliches Risiko dar.

Die Druckschrift DE 43 29 509 A1 offenbart eine Schutzvorrichtung für einen Induktionsofen, wobei eine Brückenbildung anhand von durch eine Mehrzahl von Temperatursensoren 31 erfassten Temperaturwerten ermittelt wird. Daneben ist aus der KR 2013 0104273 A bekannt, den Füllstand in einem Schmelztiegel durch Laserstrahlen, Ultraschallwellen oder bildliche Darstellung zu erfassen. Die Druckschrift WO 2021/182218 A1 offenbart einen Abstandssensor, um den Füllstand in dem Tiegel mittels Mikrowellenstrahlungen zu überwachen.

Vor diesem Hintergrund liegt der vorliegenden Erfindung die Aufgabe zu Grunde, das Chargieren einer Vorrichtung zur induktiven Erwärmung eines Metallwerkstoffs zu verbessern, insbesondere sicherer und zuverlässiger zu gestalten.

Diese Aufgabe wird erfindungsgemäß durch eine Vorrichtung zur Überwachung einer Vorrichtung zur induktiven Erwärmung eines Metallwerkstoffs mit einer Erfassungseinrichtung und mit einer Auswertungseinrichtung dadurch gelöst, dass die Erfassungseinrichtung ein optischer Sensor zum Erfassen eines Abstands ist, dass die Erfassungseinrichtung ein LIDAR-Sensor ist, wobei die Erfassungseinrichtung dazu eingerichtet ist, Strahlen im Ultraviolett-, Infrarot- oder im sichtbaren Bereich des Lichts zu emittieren, und einen Abstandswert für den zu messenden Abstand bei einem bestimmten Messzeitpunkt auf Basis der Laufzeit des Messimpulses zwischen Emittieren und Empfangen nach Reflektion zu bestimmen, und dass die Auswertungseinrichtung dazu eingerichtet ist, auf Basis von einem durch die Erfassungseinrichtung erfassten Abstands einen Füllstand der Vorrichtung zur induktiven Erwärmung zu bestimmen und ein entsprechendes Signal auszugeben, wobei mehrere Abstandswerte berücksichtigt werden, die mehreren, zum selben Zeitpunkt erfassten Abständen entsprechen, um eine Brückenbildung in dem durch die Vorrichtung zur induktiven Erwärmung aufgenommenen Metallwerkstoff zu erkennen, und wobei das Signal zur Weiterverwendung in einem Regelungsvorgang für die Zufuhr von Metallwerkstoff an die Vorrichtung zur induktiven Erwärmung geeignet ist.

Mit der erfindungsgemäßen Vorrichtung kann der Füllstand einer Vorrichtung zur induktiven Erwärmung bzw. das Absinkverhalten eines eingefüllten Metallwerkstoffs während des Befüllens der Vorrichtung zur induktiven Erwärmung überwacht und anschließend eine entsprechende Information für ein automatisches Steuern des Befüllens der Vorrichtung zur induktiven Erwärmung verwendet werden. Insgesamt stellt die erfindungsgemäße Vorrichtung einen wesentlichen Baustein für ein optimiertes Steuern einer Vorrichtung zur induktiven Erwärmung dar, sowohl hinsichtlich der Betriebssicherheit, als auch in Bezug auf die Zuverlässigkeit und auf die Produktivität.

Eine Vorrichtung zur induktiven Erwärmung eines Metallwerkstoffs im Sinne der Erfindung kann zum Beispiel ein Induktionstiegelofen, insbesondere ein zur induktiven Energieübertragung an einen aufgenommenen Metallwerkstoff eingerichteter Mittelfrequenztiegelofen, sein. So weist die Vorrichtung zur induktiven Erwärmung vorzugsweise eine um einen Aufnahmeraum, beispielsweise ein Gefäß, vorzugsweise einen Tiegel, zur Aufnahme eines Metallwerkstoffs gewickelte Spule auf, die zum Induzieren von elektromagnetischen Wirbelströmen in dem Metallwerkstoff eingerichtet ist. Der Begriff "Vorrichtung zur induktiven Erwärmung" umfasst allerdings auch jede zur Erwärmung eines Metallwerkstoffs durch Induktion eines elektromagnetischen Feldes ausgebildete Vorrichtung.

Die Erfassungseinrichtung ist ein optischer Sensor zum Erfassen eines Abstands. Die Erfassungseinrichtung ist ein LIDAR-Sensor ("Light Detection And Ranging") und ist dazu eingerichtet, Strahlen im Ultraviolett-, Infrarot- oder im sichtbaren Bereich des Lichts zu emittieren und einen Abstand zu einem Objekt über die Laufzeit der von der Objektoberfläche reflektierten Strahlen zu ermitteln. Dabei ist die Erfassungseinrichtung dazu eingerichtet, einen Abstandswert für den zu messenden Abstand bei einem bestimmten Messzeitpunkt auf Basis der Laufzeit des Messimpulses zwischen Emittieren und Empfangen nach Reflektion zu bestimmen.

Durch eine Ausbildung der Erfassungseinrichtung als optischer Sensor können bereits bestehende Vorrichtungen zur induktiven Erwärmung kostengünstig und einfach nachgerüstet werden. Insbesondere bietet eine Ausbildung der Erfassungseinrichtung als LIDAR-Sensor unter anderen die Möglichkeit einer flächenerfassenden (2D) Abstandmessung zur Überwachung eines Füllzustands. Außerdem eignet sich ein LIDAR-Sensor generell für eine industrielle Anwendung und weist eine geringe Empfindlichkeit gegenüber Rauch, Staubpartikeln, umgebender Gaszusammensetzung, extremen Temperaturen und mechanischen Einflüssen auf.

Ein LIDAR-Sensor ist zum Beispiel im Vergleich zu Lasereinrichtungen für den vorliegenden Anwendungsfall besonders vorteilhaft, denn er ermöglicht eine Erfassung eines Abstandes zu einer Fläche, wobei Lasereinrichtungen eher einen Abstand zu einem Punkt erfassen können. Daneben ist ein LIDAR-Sensor zum Beispiel gegenüber einer Radareinrichtung, dank der Möglichkeit einer Erfassung unter einem zur zu erfassenden Fläche geneigten Winkel, vorteilhaft, denn ein akkurates Erfassen mittels einer Radareinrichtung ist in der Regel senkrecht zur zu erfassenden Fläche durchzuführen.

Darüber hinaus weisen in der Regel kommerziell verfügbare LIDAR-Sensoren eine Analog-/Digitalschnittstelle auf, die eine Integration in eine bereits vorhandene Steuerungssoftware einer Vorrichtung zur induktiven Erwärmung erleichtert. Dabei kann die Erfassungseirichtung per Kabel oder über eine kabellose Kommunikationsverbindung mit der Auswertungseinrichtung verbindbar sein.

Des Weiteren kann die Erfassungseinrichtung dazu eingerichtet sein, Dämpfungen und Störimpulse durch die Atmosphäre, die z. B. durch Rauch oder Nebel auf dem Lichtweg des emittierten und reflektierten Messimpulses verursacht werden, über eine integrierte dynamische Anpassung der Messempfindlichkeit herauszufiltern. Dadurch kann die Erfassungseinrichtung auch in dynamisch wechselnden Umgebungen eingesetzt werden.

Vorzugsweise ist die Erfassungseinrichtung dazu eingerichtet, Abstände bis zu 40 m zu erfassen, wobei der Wert für einen maximal erfassbaren Abstand von dem Brechungsindex der Oberfläche abhängig ist, auf der der Messimpuls gestreut wird. Außerdem kann die Erfassungseinrichtung dazu eingerichtet sein, einen Abstand zu einer Oberfläche zu erfassen, die eine Temperatur bis zu 1 200 °C aufweist, und bei Temperaturen im Bereich von -25 °C bis 200 °C betrieben zu werden, teilweise durch Ergänzung mit entsprechendem Zubehör.

Die Erfassungseinrichtung ist für ein zeitaufgelöstes Erfassen eines Abstands eingerichtet. Der Begriff "zeitaufgelöstes Erfassen" umfasst vorliegend jeden Vorgang, bei dem mindestens zwei relativ zueinander, in der Zeit verzögerte Erfassungen durchgeführt werden. Vorzugsweise ist die Erfassungseinrichtung dazu eingerichtet, mehrere durch ein vorbestimmtes Zeitintervall zeitlich voneinander beabstandete Erfassungen über eine vorbestimmte Zeitdauer durchzuführen und für jede Erfassung einen dem erfassten Abstand entsprechenden Abstandswert auszugeben. Hierbei kann die vordefinierte Zeitdauer automatisch anpassbar, wiederholbar, für die Zwecke einer Stichprobe relativ kurz, beispielsweise weniger als eine Stunde und/oder unbegrenzt sein. Alternativ oder zusätzlich kann die Zeitdauer der Dauer entsprechen, für die die Vorrichtung zur induktiven Erwärmung zu Schmelzen einer Charge bis zu ihrem Nenngewicht betrieben wird.

Weiterhin ist die Erfassungseinrichtung dazu eingerichtet, Abstandswerte auszugeben, die jeweils einem erfassten Abstand entsprechen. Vorzugsweise entspricht ein Abstandswert einem im Laufe des zeitaufgelösten Erfassens, bei einem einzelnen Zeitpunkt erfassten Abstand. Somit kann anhand sukzessiver Abstandwerte eine zeitliche Entwicklung eines Abstandes in Echtzeit überwacht und/oder im Nachhinein nachvollzogen werden. Weiter bevorzugt ist eine Eignung der Erfassungseinrichtung zur Ausgabe von Abstandswerten als maschinenlesbare Informationen.

Die erfindungsgemäße Vorrichtung weist eine Auswertungseinrichtung auf. Diese weist vorzugsweise einen Prozessor, einen Datenspeicher und einen Programmcode auf, dessen Ausführung auf dem Prozessor die Durchführung einer Auswertung der durch die Erfassungseinrichtung ausgegebenen Abstandswerte bewirkt. Außerdem ist die Auswertungseinrichtung dazu eingerichtet, auf Basis von einem durch die Erfassungseinrichtung erfassten Abstand einen Füllstand der Vorrichtung zur induktiven Erwärmung zu bestimmen. Hierbei kann die Auswertungseinrichtung weitere Informationen heranziehen, wie zum Beispiel eine Winkelposition der Erfassungseinrichtung gegenüber einer Referenzposition an der Vorrichtung zur induktiven Erwärmung oder einen Abstand zwischen der Erfassungseinrichtung und einer Referenzposition an der Vorrichtung zur induktiven Erwärmung, um diese mit dem erfassten Abstand zu kombinieren oder zu ergänzen.

Darüber hinaus ist die Auswertungseinrichtung dazu eingerichtet, ein Signal auszugeben, das eine Information über den Füllstand der Vorrichtung zur induktiven Erwärmung aufweist. Hierbei ist das Signal vorzugsweise eine codierte Einheit, dessen Informationsinhalt dem Auswertungsergebnis entspricht. Das Signal ist zur Weiterverwendung in einem Regelungsvorgang für die Zufuhr von Metallwerkstoff an die Vorrichtung zur induktiven Erwärmung geeignet. Insbesondere ist das Signal dazu geeignet, durch eine nachgelagerte Rechnereinheit decodiert zu werden und seinen Informationsinhalt für eine zeitechte Anpassung der vorgesehenen Schüttmengen zum Befüllen der Vorrichtung zur induktiven Erwärmung zu berücksichtigen.

Bei einer ersten Ausführungsform der Vorrichtung zur Überwachung einer Vorrichtung zur induktiven Erwärmung ist die Erfassungseinrichtung zum zeitaufgelösten Erfassen eines Abstandes und Ausgeben von entsprechenden Abstandswerten eingerichtet und die Auswertungseinrichtung ist dazu eingerichtet, auf Basis von durch die Erfassungseinrichtung ausgegebenen Abstandswerten eine zeitliche Entwicklung des Füllstandes nachzuvollziehen, und das Signal entsprechend anzupassen.

Dadurch kann die Zufuhr von Schüttgut in Echtzeit gesteuert bzw. geregelt werden, und so sowohl die Betriebssicherheit als auch die Produktivität der Vorrichtung zur induktiven Erwärmung bzw. eines Induktionstiegelofens gesteigert werden.

Vorzugsweise ist die Auswertungseinrichtung dazu eingerichtet, ein Signal kontinuierlich auszugeben, das eine Information über den aktuellen Füllstand der Vorrichtung zur induktiven Erwärmung aufweist. So kann auch ein Steuern bzw. Regeln der Zufuhr von Metallwerkstoff bzw. von Schüttgut kontinuierlich erfolgen.

Bei einer weiteren Ausführungsform der Vorrichtung zur Überwachung einer Vorrichtung zur induktiven Erwärmung entspricht der Füllstand an einem bestimmten Zeitpunkt einem Abstand zwischen einer relativ zur Vorrichtung zur induktiven Erwärmung festen Referenzposition und einer Position an der freien Oberfläche des durch die Vorrichtung zur induktiven Erwärmung aufgenommenen Metallwerkstoffs zu dem bestimmten Zeitpunkt.

Somit kann der Füllzustand bzw. die Höhe, bis zu der ein Aufnahmeraum der Vorrichtung zur induktiven Erwärmung mit zum schmelzenden Metallwerksoff gefüllt ist, überwacht werden.

Dabei ist die Referenzposition, die relativ zu der Vorrichtung zur induktiven Erwärmung fest ist, vorzugsweise ein Punkt an der Wandung oder an einem Rand eines Aufnahmeraums der Vorrichtung zur induktiven Erwärmung. Insbesondere kann die Referenzposition ein Punkt am oberen Rand eines Induktionstiegels der Vorrichtung zur induktiven Erwärmung sein.

Daneben ist die Position an der freien Oberfläche des durch die Vorrichtung zur induktiven Erwärmung aufgenommenen Metallwerkstoffs zu einem bestimmten Zeitpunkt vorzugsweise ein Punkt bzw. eine Fläche an der Oberfläche des eingefüllten Metallwerkstoffs. Durch regelmäßiges Erfassen des Abstands zwischen dem Rand des Tiegels und der Oberfläche des in den Tiegel eingefüllten Metallwerkstoffs kann das Absinkverhalten des Metallwerkstoffs beobachtet und somit auch eine Brückenbildung rechtzeitig erkannt werden.

Des Weiteren ist die Erfassungseinrichtung vorzugsweise dazu eingerichtet, eine flächige Abstandmessung durchzuführen, wobei die Erfassungseinrichtung Messimpulse emittiert, die die freie Oberfläche des durch die Vorrichtung zur induktiven Erwärmung aufgenommenen Metallwerkstoffs flächig treffen. Bei einem solchen Vorgehen ergibt sich ein Messfleckdurchmesser auf der reflektierenden, freien Oberfläche des eingefüllten Metallwerkstoffs, dessen Radius bzw. Ausdehnung von dem Abstand zwischen der Erfassungseinrichtung und der getroffenen freien Oberfläche abhängig ist.

Weiterhin ist die Erfassungseinrichtung vorzugsweise dazu eingerichtet, ein Messimpuls mit einem Lichtkegel von mindestens 2°, vorzugsweise von mindestens 5°, weiter bevorzugt von 6° ± 1° zu emittieren. Außerdem ist die Erfassungseinrichtung vorzugsweise in der Lage, Messimpulse mit einer Frequenz im Bereich von 2 Hz bis 141 Hz, bevorzugt im Bereich von 2,2 Hz bis 140,88 Hz, zu emittieren. Der emittierte Messimpuls kann eine Wellenlänge im Infrarot-Bereich aufweisen.

Bei einer weiteren Ausführungsform der Vorrichtung zur Überwachung einer Vorrichtung zur induktiven Erwärmung ist die Auswertungseinrichtung für einen Zugriff auf mindestens einen voreingestellten und/oder erfassten Wert für einen Betriebsparameter der Vorrichtung zur induktiven Erwärmung eingerichtet, und die Auswertungseinrichtung ist dazu eingerichtet, eine Brückenbildung in dem durch die Vorrichtung zur induktiven Erwärmung aufgenommenen Metallwerkstoff unter Berücksichtigung von durch die Erfassungseinrichtung ausgegebenen Abstandswerten und von dem mindestens einen voreingestellten und/oder erfassten Wert für einen Betriebsparameter der Vorrichtung zur induktiven Erwärmung zu erkennen.

Durch Berücksichtigung sowohl von der zeitlichen Entwicklung des Füllzustands in der Vorrichtung zur induktiven Erwärmung, als auch von weiteren Faktoren, die einen Einfluss auf den Schmelzprozess des durch die Vorrichtung zur induktiven Erwärmung aufgenommenen Metallwerkstoffs haben, kann eine Feststellung einer Brückenbildung auf sichere Weise gewährleistet werden.

Vorzugsweise weist die Auswertungseinrichtung für den Zugriff auf Betriebsparameterwerte eine Kommunikationsschnittstelle auf, über die die Auswertungseinrichtung mit einem Steuersystem der Vorrichtung zur induktiven Erwärmung in Verbindung steht.

Für den Betrieb der Vorrichtung zur induktiven Erwärmung können Betriebsparameter voreingestellt werden, beispielsweise Sollwerte für eine Temperatur, eine Leistung, ein Gewicht oder Ähnliches. Alternativ oder zusätzlich können Istwerte für diese Betriebsparameter im Laufe eines Schmelzvorgangs erfasst werden. Aus dem Verhalten zwischen Sollwerten und Istwerten kann die Vorrichtung zur induktiven Erwärmung adaptiv gesteuert bzw. geregelt werden.

Bei einer weiteren Ausführungsform der Vorrichtung zur Überwachung einer Vorrichtung zur induktiven Erwärmung ist der mindestens eine voreingestellte und/oder erfasste Wert für einen Betriebsparameter der Vorrichtung zur induktiven Erwärmung ein Wert für
- ein Gewicht, insbesondere ein Gewicht für einen mit dem Metallwerkstoff beladenen Aufnahmeraum der Vorrichtung zur induktiven Erwärmung,
- eine Leistungsabnahme der Vorrichtung zur induktiven Erwärmung bzw. eine Leistungsabnahme der Vorrichtung zur induktiven Erwärmung vom Energieversorgungsnetzwerk,
- ein Gewicht für einen durch die Vorrichtung zur induktiven Erwärmung aufgenommenen Metallwerkstoff,
- eine Temperatur, insbesondere eine Temperatur für einen durch die Vorrichtung zur induktiven Erwärmung aufgenommenen Metallwerkstoff, oder
- eine bereits von der Vorrichtung zur induktiven Erwärmung, einem durch die Vorrichtung zur induktiven Erwärmung aufgenommenen Metallwerkstoff, zugeführte Energie.

Durch Berücksichtigung mindestens eines dieser Betriebsparameter bzw. dessen voreingestellten Sollwerts oder dessen erfassten Istwerts kann das Bestimmen einer Brückenbildung mit erhöhter Verlässlichkeit durchgeführt werden.

Aus dem Gewicht eines durch den Aufnahmeraum der Vorrichtung zur induktiven Erwärmung kann eine zum Schmelzen des Metallwerkstoffs zuzuführende Energie berechnet werden bzw. ein Verhältnis zwischen einer zugeführten Energie und einer zuzuführenden Energie.

Bei einer weiteren Ausführungsform der Vorrichtung zur Überwachung einer Vorrichtung zur induktiven Erwärmung ist das durch die Auswertungseinrichtung ausgegebene Signal zur Weiterverwendung durch eine Warneinrichtung geeignet und die Warneinrichtung ist zum Ausgeben eines Warnsignals ausgebildet, wenn das Signal eine Information über ein positives Erkennen einer Brückenbildung aufweist.

Somit kann das Betriebspersonal darüber informiert werden, dass sich eine Brücke gebildet hat und rechtzeitig entsprechende Sicherheitsmaßnahmen treffen, um Verletzungen und/oder Sachschäden zu vermeiden.

Die Warneinrichtung ist vorzugsweise dazu ausgebildet, ein Warnsignal in Form eines Alarms oder einer optischen Anzeige auszugegeben.

Bei einer weiteren Ausführungsform der Vorrichtung zur Überwachung einer Vorrichtung zur induktiven Erwärmung ist die Erfassungseinrichtung an einer Beförderungseinrichtung, insbesondere an einem Spritzschutz einer Beförderungseinrichtung zum Zuführen von Metallwerkstoff zur Vorrichtung zur induktiven Erwärmung angeordnet.

Somit kann die Erfassungseinrichtung einen direkten Lichtweg zur freien Oberfläche des durch die Vorrichtung zur induktiven Erwärmung aufgenommenen Metallwerkstoffs haben. In der Regel ist der Spritzschutz der Beförderungseinrichtung über einer oberen Öffnung des Aufnahmeraums der Vorrichtung zur induktiven Erwärmung angeordnet, so dass durch die beanspruchte Anordnung der Erfassungseinrichtung die gesamte Tiefe des Aufnahmeraums erfasst werden kann. Außerdem ist diese Anordnung sowohl für eine Nachrüstung einer bereits vorhandenen Vorrichtung zur induktiven Erwärmung mit einer leicht zugänglichen Montageposition als auch für die Wartung der Erfassungseinrichtung vorteilhaft.

Darüber hinaus können Kabel für einen Anschluss der Erfassungseinrichtung mit nachgelagerten Vorrichtungen, wie zum Beispiel die Auswertungseinrichtung, durch die Decke des Spritzschutzes durchgeführt und in einem Kabelkanal verlegt werden. Dadurch sind die Kabel gegen die Temperaturen, die in der Vorrichtung zur induktiven Erwärmung vorkommen, geschützt. Eine Vorrichtung zur Stromversorgung und Steuerung der Erfassungseinrichtung kann an einer Seite der Beförderungseinrichtung befestigt sein.

Die oben genannte Aufgabe ist ferner bei einem Verfahren zum automatischen Beladen einer Vorrichtung zur induktiven Erwärmung eines Metallwerkstoffs dadurch gelöst, dass durch eine als LIDAR-Sensor ausgebildete Erfassungseinrichtung Strahlen im Ultraviolett-, Infrarot- oder im sichtbaren Bereich des Lichts emittiert werden und ein Abstand zeitaufgelöst erfasst wird, wobei ein Abstandswert für den zu messenden Abstand bei einem bestimmten Messzeitpunkt auf Basis der Laufzeit des Messimpulses zwischen Emittieren und Empfangen nach Reflektion bestimmt wird, dass entsprechende Abstandswerte ausgegeben werden, dass auf Basis von den Abstandswerten ein eine Information über einen Füllstand der Vorrichtung zur induktiven Erwärmung aufweisendes Signal ausgegeben wird, wobei mehrere Abstandswerte berücksichtigt werden, die mehreren, zum selben Zeitpunkt erfassten Abständen entsprechen, um eine Brückenbildung in dem durch die Vorrichtung zur induktiven Erwärmung aufgenommenen Metallwerkstoff zu erkennen, und dass die Zufuhr von Metallwerkstoff an die Vorrichtung zur induktiven Erwärmung in Abhängigkeit von der Information über einen Füllstand gesteuert bzw. geregelt wird.

Dieses Verfahren bietet dieselben Vorteile wie die erfindungsgemäße Vorrichtung zur Überwachung einer Vorrichtung zur induktiven Erwärmung eines Metallwerkstoffs. Insbesondere kann durch ein Steuern bzw. Regeln der Zufuhr von Metallwerkstoff bzw. Schüttgut die Betriebssicherheit für das Bedienpersonal und für die Anlage selbst verbessert werden. Auch die Anlagenverfügbarkeit und die Kosten aufgrund von Schäden durch Brückenbildung können durch das erfindungsgemäße Verfahren optimiert werden.

Mit den Begriffen "Regeln" bzw. "Regelungsvorgang" wird vorliegend ein adaptives Steuern verstanden, wobei das Steuern zum Beispiel einer Beförderungseinrichtung für die Zufuhr von Metallwerkstoff an eine Vorrichtung zur induktiven Erwärmung in Abhängigkeit vom Erkennen einer Brückenbildung angepasst wird.

Bei einer ersten Ausführungsform des Verfahrens wird ein zumindest teilweises Beladen der Vorrichtung zur induktiven Erwärmung durch eine Beförderungseinrichtung, insbesondere durch einen Chargierwagen oder durch eine verfahrbare Beförderungsrinne, in Abhängigkeit von der Information über einen Füllstand der Vorrichtung zur induktiven Erwärmung zumindest vorübergehend unterbunden oder fortgeführt.

Dadurch kann ein Chargiervorgang zumindest teilweise automatisiert werden. Insbesondere kann ein an den tatsächlichen, aktuellen Füllstand der Vorrichtung zur induktiven Erwärmung angepasster Chargiervorgang ohne die Anwesenheit von Bedienpersonal in der unmittelbaren Nähe der Vorrichtung zur induktiven Erwärmung durchgeführt werden.

Der Chargierwagen ist vorzugsweise ein auf Schienen verfahrbarer Wagen. Die verfahrbare Beförderungsrinne kann eine in Richtung der Vorrichtung zur induktiven Erwärmung verfahrbare Vibrationsschwingrinne sein.

Bei einer weiteren Ausführungsform des Verfahrens wird das zumindest teilweise Beladen gestartet oder wiederaufgenommen, wenn der Füllstand einen vorbestimmten Untergrenzwert unterschreitet, und/oder dass das zumindest teilweise Beladen pausiert oder gestoppt wird, wenn der Füllstand einen vorbestimmten Obergrenzwert überschreitet.

So kann mit dem Bestimmen von Ober- und Untergrenzwerten ein Schmelzvorgang bereits im Vorfeld optimiert werden. Insbesondere kann somit das Chargieren der Vorrichtung zur induktiven Erwärmung automatisch und ohne Rücksicht auf die Packungsdichte des Schüttguts durchgeführt werden.

Der Untergrenzwert und der Obergrenzwert sind vorzugsweise jeweils in Bezug auf eine relativ zur Vorrichtung zur induktiven Erwärmung feste Referenzposition definiert. Zum Feststellen eines Unter- oder Überschreitens ist die Auswertungseinrichtung vorzugsweise dazu eingerichtet, den Untergrenzwert bzw. den Obergrenzwert abzurufen, und den aktuellen Füllstand mit diesem zu vergleichen.

Bei dem Verfahren werden mehrere Abstandswerte berücksichtigt, die mehreren, zum selben Zeitpunkt erfassten Abständen entsprechen, um eine Brückenbildung in dem durch die Vorrichtung zur induktiven Erwärmung aufgenommenen Metallwerkstoff zu erkennen.

Dadurch kann die zeitliche Entwicklung des Absinkens eines Flächenbereichs der freien Oberfläche des aufgenommenen Metallwerkstoffs beobachtet werden. Dies kann dadurch bewerkstelligt werden, dass ein Messimpuls mit einem Lichtkegel auf die freie Oberfläche des aufgenommenen Metallwerkstoffs trifft, und so eine Messfläche beobachtet wird. Alternativ oder zusätzlich können mehrere Messimpulse gleichzeitig emittiert und in Richtung der freien Oberfläche des aufgenommenen Metallwerkstoffs gesendet werden, um das Absinkverhalten mehrerer Positionen an der freien Oberfläche des aufgenommenen Metallwerkstoffs zu beobachten.

Bei einer weiteren Ausführungsform des Verfahrens wird auf Basis von den Abstandswerten bestimmt, ob der Füllstand über eine vorbestimmte Zeitdauer im Wesentlichen abnimmt, konstant bleibt oder zunimmt, und auf Basis von der zeitlichen Entwicklung des Füllstands wird eine Brückenbildung in dem durch die Vorrichtung zur induktiven Erwärmung aufgenommenen Metallwerkstoff erkannt.

Ein charakteristisches Zeichen für das Vorliegen einer Brücke bzw. für eine Brückenbildung ist ein Verlangsamen und/oder ein Stillstand des Absinkens des Materials, das durch die Vorrichtung zur induktiven Erwärmung aufgenommenen wurde. Dadurch, dass der Schmelzprozess durch die Brückenbildung gestört ist, schmilzt das obere, nachgefüllte Material nicht mit der gleichen Geschwindigkeit, als wenn sich keine Brücke gebildet hat. Durch das Beobachten der zeitlichen Entwicklung des Absinkverhaltens des durch die Vorrichtung zur induktiven Erwärmung aufgenommenen Metallwerkstoffs, kann also auf eine erfolgte Brückenbildung geschlossen werden.

Insbesondere kann die Auswertungseinrichtung dazu eingerichtet sein, in einem Diagramm, das die Zeit als Abszissenachse und Werte für den Füllstand als Ordinatenachse hat, flache Bereiche einer Messkurve zu erkennen. Auch kann ein Zeitfenster vordefiniert sein, wobei ein Kurvenbereich als "flacher Bereich" eingestuft wird, wenn die erfassten Abstandwerte bzw. der für die entsprechende zeitliche Entwicklung des Füllstands über die Gesamtheit dieses Zeitfensters im Wesentlichen konstant bleiben bzw. bleibt. Wird ein flacher Bereich erkannt, dann werden vorzugsweise weitere Parameter herangezogen, um festzustellen, ob eine Brückenbildung vorliegt.

Bei einer weiteren Ausführungsform des Verfahrens werden in Abhängigkeit der zeitlichen Entwicklung des Füllstands voreingestellte und/oder erfasste Werte für mindestens einen Betriebsparameter der Vorrichtung zur induktiven Erwärmung abgerufen und für das Erkennen einer Brückenbildung berücksichtigt.

Durch ein Berücksichtigen von weiteren Parametern im Schmelzvorgang an der Vorrichtung zur induktiven Erwärmung als Sollwert und/oder als Istwert kann das Bestimmen des Vorliegens einer Brückenbildung mit erhöhter Zuverlässigkeit gewährleistet werden.

Wurde zum Beispiel ein flacher Bereich in einer Zeit/Abstand-Messkurve erkannt, kann geprüft werden, ob die Vorrichtung zur induktiven Erwärmung gerade erstmalig befüllt worden ist, oder ob sich der durch die Vorrichtung zur induktiven Erwärmung aufgenommene Metallwerkstoff am Beginn des Schmelzprozesses befindet. Ist dies zu bejahen, dann ist der Metallwerkstoff vergleichsweise kalt und soll zunächst auf eine Schmelztemperatur gebracht werden, bevor ein Absinken aufgrund des Schmelzens erfolgt. Somit ist dann davon auszugehen, dass keine Brückenbildung erfolgt ist.

Als weitere Abfrage zur Feststellung einer Brückenbildung beim Erkennen eines flachen Bereichs in einer Messkurve kann die Leistung der Vorrichtung zur induktiven Erwärmung überprüft werden. Ist die Vorrichtung zur induktiven Erwärmung ausgeschaltet oder die Leistung stark gedrosselt, dann wird der Schmelzprozess unterbrochen und verlangsamt sich, allerdings ohne dass dies auf eine Brückenbildung zurückzuführen ist.

Als weitere Abfrage kann das Verhältnis zwischen der Energie, bei der der durch die Vorrichtung zur induktiven Erwärmung aufgenommene Metallwerkstoff schmilzt, und der durch die Vorrichtung zur induktiven Erwärmung bereits zugeführten Energie überprüft werden. Hierbei ist vorzugsweise ein Grenzwert für dieses Verhältnis vorbestimmt, bei dem davon auszugehen ist, dass eine Brückenbildung vorliegt.

Im Rahmen der Erfindung wurde festgestellt, dass der Füllstand über ein vordefiniertes Zeitfenster im Wesentlichen konstant bleibt, dass der Schmelzprozess bereits begonnen hat, dass die Leistung der Vorrichtung zur induktiven Erwärmung keinem Ausschaltzustand oder gedrosseltem Zustand der Vorrichtung zur induktiven Erwärmung entspricht, und auch dass die bereits zugeführt Energie einem bestimmten Referenzwert überschreitet, dann wird das Vorliegen einer Brückenbildung bejaht.

Die Reihenfolge dieser Abfragen kann beliebig verändert werden bzw. die Abfragen sind im Rahmen eines Auswertungsverfahrens miteinander beliebig austauschbar.

Der mindestens eine voreingestellte und/oder erfasste Wert für einen Betriebsparameter der Vorrichtung zur induktiven Erwärmung kann ein Wert für
- ein Gewicht, insbesondere ein Gewicht für einen mit dem Metallwerkstoff beladenen Aufnahmeraum der Vorrichtung zur induktiven Erwärmung,
- eine Leistungsabnahme der Vorrichtung zur induktiven Erwärmung,
- ein Gewicht für den durch die Vorrichtung zur induktiven Erwärmung aufgenommene Metallwerkstoff,
- eine Temperatur, insbesondere eine Temperatur für den durch die Vorrichtung zur induktiven Erwärmung aufgenommenen Metallwerkstoff, oder
- eine bereits zugeführte Energie sein.

Dadurch kann das Feststellen des Vorliegens einer Brückenbildung mit erhöhter Zuverlässigkeit gewährleistet werden. Insbesondere kann anhand des Gewichts der Vorrichtung zur induktiven Erwärmung in einem befüllten Zustand und/oder anhand eines Gewichts für den durch die Vorrichtung zur induktiven Erwärmung aufgenommenen Metallwerkstoff die Energie berechnet werden, die für ein Schmelzen des Metallwerkstoffs zuzuführen ist bzw. das Verhältnis zwischen der Schmelzenergie und der bereits zugeführten Energie überprüft werden.

Bei einer weiteren Ausführungsform des Verfahrens wird, wenn das Signal eine Information über ein positives Erkennen einer Brückenbildung aufweist, die Zufuhr von Metallwerkstoff an die Vorrichtung zur induktiven Erwärmung zumindest vorübergehend verringert oder unterbunden und/oder ein Warnsignal ausgegeben.

Dadurch kann vermieden werden, dass die Vorrichtung zur induktiven Erwärmung weiter befüllt wird, wenn festgestellt wird, dass eine Brücke vorliegt, bzw. dass der bereits durch die Vorrichtung zur induktiven Erwärmung aufgenommene Metallwerkstoff nicht weiter sinkt. Außerdem kann ggf. das Bedienungspersonal gewarnt werden, dass sich eine Brücke in dem durch die Vorrichtung zur induktiven Erwärmung aufgenommenen Metallwerkstoff gebildet hat.

Die Zufuhr kann solange unterbunden bzw. unterbrochen werden, wie eine Brücke vorliegt und dann wieder weiter durchgeführt werden, wenn keine Brücke mehr vorhanden ist und der durch die Vorrichtung zur induktiven Erwärmung aufgenommene Metallwerkstoff bestimmungsgemäß aufgrund des Schmelzprozesses absinkt.

Die oben genannte Aufgabe wird erfindungsgemäß auch durch ein Steuerungssystem für eine Vorrichtung zur induktiven Erwärmung eines Metallwerkstoffs mit einer Vorrichtung nach einem der oben beschriebenen Ausführungsformen und mit einer Regelungseinheit dadurch gelöst, dass die Regelungseinheit dazu eingerichtet ist, die Zufuhr von Metallwerkstoff an die Vorrichtung zur induktiven Erwärmung in Abhängigkeit von einem Füllstand der Vorrichtung zur induktiven Erwärmung zu regeln bzw. zu steuern.

Auch durch dieses Steuerungssystem kann die Zufuhr von Schüttgut bzw. von zu schmelzenden Metallwerkstoff adaptiv gesteuert bzw. geregelt werden.

Die Regelungseinheit ist vorzugsweise über eine Kommunikationsverbindung mit der Auswertungseinrichtung der Vorrichtung zur Überwachung einer Vorrichtung zur induktiven Erwärmung verbindbar. Diese Kommunikationsverbindung kann per Kabel oder kabellos ausgebildet sein. Somit können Informationen, beispielsweise über das Vorliegen einer Brücke oder über eine Brückenbildung, ausgetauscht werden.

Daneben kann die Regelungseinheit dazu eingerichtet sein, eine Beförderungseinrichtung für die Zufuhr von Metallwerkstoff an eine Vorrichtung zur induktiven Erwärmung in Abhängigkeit von einer durch die Auswertungseinrichtung ausgegebenen Information über einen Füllstand zu steuern. Weiter bevorzugt ist die Regelungseinheit dazu eingerichtet, die Zufuhr von Metallwerkstoff bzw. Schüttgut an die Vorrichtung zur induktiven Erwärmung zumindest vorübergehend zu verringern oder zu unterbinden, wenn das Vorliegen einer Brückenbildung positiv erkannt wird.

Bei einer ersten Ausführungsform des Steuerungssystems ist die Regelungseinheit dazu eingerichtet, ein zumindest teilweises Beladen der Vorrichtung zur induktiven Erwärmung durch eine Beförderungseinrichtung, insbesondere durch einen Chargierwagen oder durch eine verfahrbare Beförderungsrinne zu veranlassen, wenn der Füllstand einen vorbestimmten Untergrenzwert unterschreitet, und/oder zu pausieren oder zu stoppen, wenn der Füllstand einen vorbestimmten Obergrenzwert überschreitet.

Darüber hinaus kann beim Steuerungssystem eine Steuerungseinrichtung zum Einstellen und/oder zum Erfassen von mindestens einem Betriebsparameter der Vorrichtung zur induktiven Erwärmung vorgesehen sein, insbesondere von einer Energiezufuhr, von einer Leistungsabnahme, und/oder von einer Temperatur. Dabei ist die Steuerungseinrichtung vorzugsweise dazu eingerichtet, mindestens einen eingestellten und/oder erfassten Wert für einen Betriebsparameter für ein Erkennen einer Brückenbildung in dem durch die Vorrichtung zur induktiven Erwärmung aufgenommenen Metallwerkstoff zur Verfügung zu stellen.

Mit einem derartigen Steuerungssystem können einerseits das Absinkverhalten des aufgenommenen Metallwerkstoffs und auch weitere Betriebsparameter herangezogen werden, um das Vorliegen einer Brückenbildung zu bestimmen. Auch kann die Vorrichtung zur induktiven Erwärmung in Abhängigkeit dieser Bestimmung gesteuert bzw. geregelt werden.

Über die oben beschriebenen Ausführungsformen hinaus kann mit dem Signal, das vom Erkennen einer Brückenbildung abhängig ist, und das durch die Auswertungseinrichtung ausgegeben wird, ein Sollwert für sämtliche Betriebsparameter der Vorrichtung zur induktiven Erwärmung adaptiv gesteuert bzw. geregelt werden. Eine nicht abschließende Liste von Beispielen hierzu ist: die Zufuhr von Metallwerkstoff an die Vorrichtung zur induktiven Erwärmung, eine durch die Vorrichtung zur induktiven Erwärmung zugeführte Energie, eine Temperatur, und/oder ein Gewicht für einen zu schmelzenden Metallwerkstoff.

Die oben genannte Aufgabe wird außerdem durch ein Computerprogramm für eine Vorrichtung zur Überwachung des Füllzustands einer Vorrichtung zur induktiven Erwärmung eines Metallwerkstoffs gelöst, dessen Ausführung auf einem Prozessor der Vorrichtung zur Überwachung des Füllzustands die Durchführung eines Verfahrens nach einer der oben beschriebenen Ausführungsformen bewirkt.

Die Ausführungsformen der Vorrichtung zur Überwachung des Füllzustands einer Vorrichtung zur induktiven Erwärmung eines Metallwerkstoffs, des Verfahrens zum automatischen Beladen einer Vorrichtung zur induktiven Erwärmung eines Metallwerkstoffs und des Steuerungssystems für eine Vorrichtung zur induktiven Erwärmung eines Metallwerkstoffs sind beliebig miteinander kombinierbar.

Weitere Vorteile der Merkmale der Erfindung ergeben sich aus der Beschreibung der nachfolgenden Ausführungsbeispiele, wobei auf die beigefügte Zeichnung Bezug genommen wird. In der Zeichnung zeigen
- Fig. 1: ein Beispiel für eine Vorrichtung zur induktiven Erwärmung eines Metallwerkstoffs;
- Fig. 2: die Vorrichtung aus der Fig. 1 in Detailansicht, wobei eine Brückenbildung in dem aufgenommenen Metallwerkstoff erfolgt ist;
- Fig. 3: eine Ausführungsform einer Vorrichtung zur Überwachung einer Vorrichtung zur induktiven Erwärmung eines Metallwerkstoffs;
- Fig. 4: eine Detailansicht der Vorrichtung aus Fig. 3; und
- Fig. 5: eine Ausführungsform eines Steuerungssystems für eine Vorrichtung zur induktiven Erwärmung eines Metallwerkstoffs.

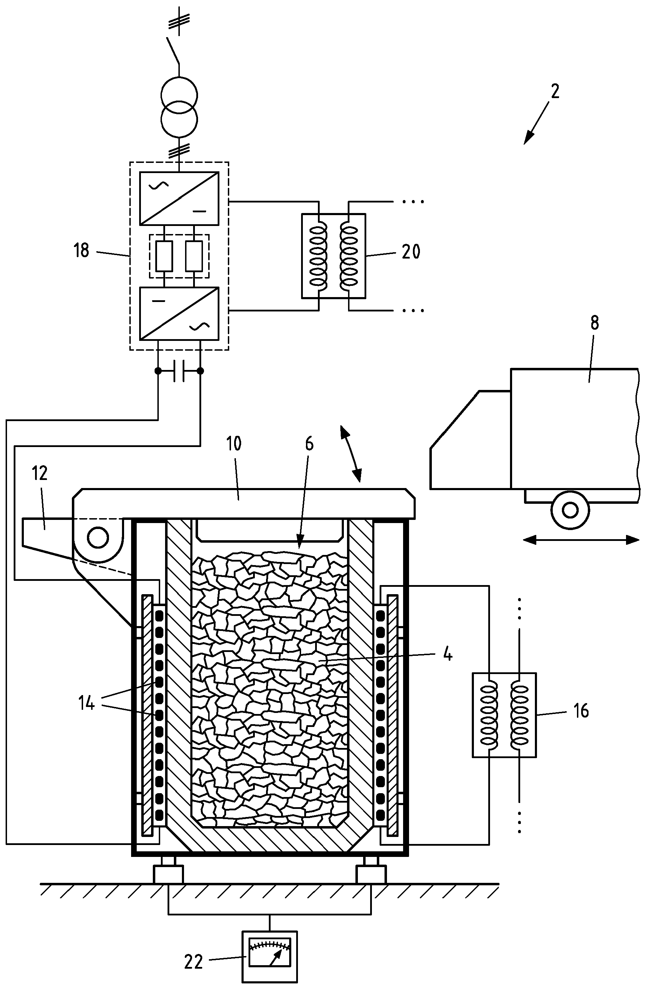

Fig. 1 zeigt ein Beispiel für eine Vorrichtung 2 zur induktiven Erwärmung eines Metallwerkstoffs 4 aus dem Stand der Technik mit einem Aufnahmeraum 6 zur Aufnahme eines zu schmelzenden Schüttguts in Form von Schrottstücken aus Metallwerkstoff 4 und mit einer Beförderungseinrichtung 8 zum Befüllen des Aufnahmeraums 6. Die Beförderungseinrichtung 8 ist als Chargierwagen ausgebildet. Der Aufnahmeraum 6 steht in Abhängigkeit der Position einer Absaughaube 10 für ein Befüllen oder Abfüllen mittels eines als Abstichschnauze ausgebildeten Gießabschnittes 12 zur Verfügung.

Um den Aufnahmeraum 6 ist eine Spule 14 herumgewickelt, die einerseits mit einem Kühlsystem 16 und andererseits mit einem Mittelfrequenz-Umrichter (MF-Umrichter) 18 verbunden ist. Der MF-Umrichter 18 ist wiederum durch ein weiteres Kühlsystem 20 temperiert.

Eine Wiegezelle 22 dient zur Überwachung des Gewichts des Aufnahmeraums 6.

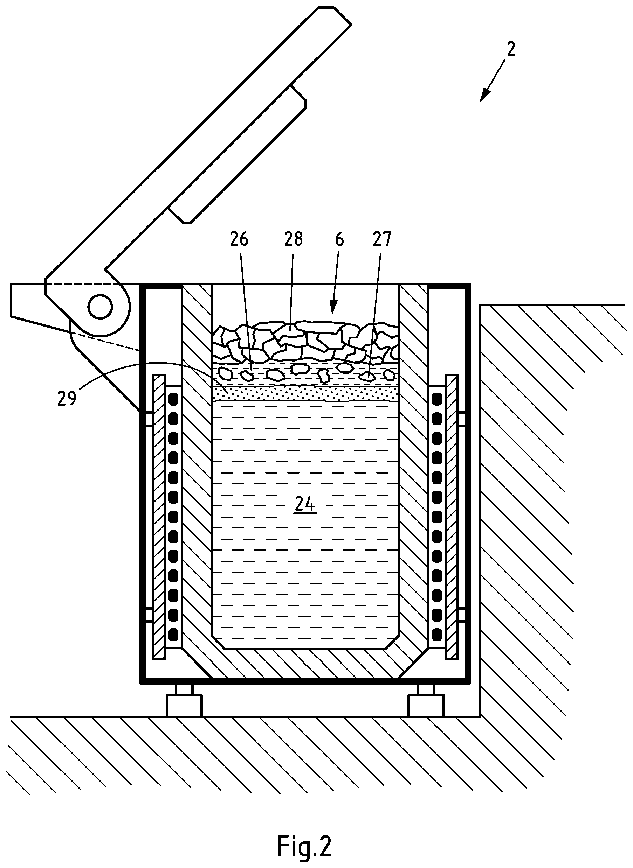

Fig. 2 zeigt die Vorrichtung 2 aus Fig. 1 in einer Detailansicht, wobei eine Brückenbildung in dem aufgenommenen Metallwerkstoff erfolgt ist. Zu sehen ist der Aufnahmeraum 6, in dem ein Metallwerkstoff teilweise geschmolzen ist. Über der Schmelze 24 hat sich eine Schicht 26 aus einer erstarrten, nichtmetallischen Begleitphase bzw. Schlacke gebildet, die zum Beispiel aus einem vorherigen Schmelzvorgang entstanden ist. Über dieser Schicht 26 liegen feste Einzelstücke 27 bzw. Schrottkomponente aus einem zu schmelzenden Metallwerkstoff 28. Die Schicht 26 weist harte, noch nicht geschmolzene Einzelstücke 27 auf.

Die mittlere Schicht 26 bildet eine luftdichte Abdichtung zwischen der Schmelze 24 und dem noch zu schmelzenden Metallwerkstoff 28 und hindert Letzteren zu schmelzen. Zwischen der Schicht 26 und der Schmelze 24 hat sich ein Raum 29 mit Gasen aus dem Schmelzprozess gebildet, die wegen der luftdichten Schicht 26 nicht entweichen können.

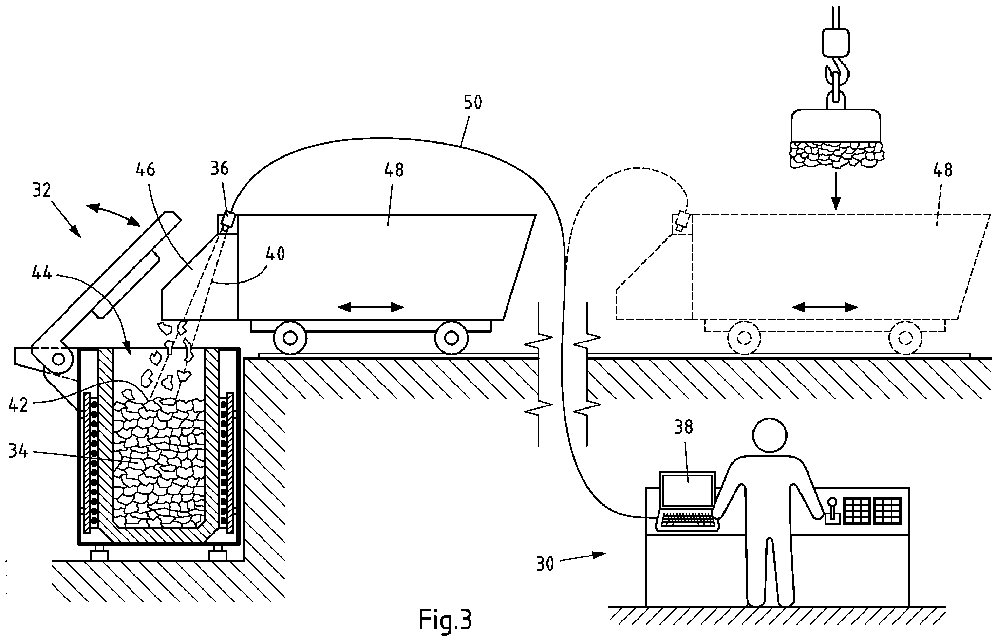

Fig. 3 zeigt eine Ausführungsform einer Vorrichtung zur Überwachung 30 einer Vorrichtung zur induktiven Erwärmung 32 eines Metallwerkstoffs 34 mit einer Erfassungseinrichtung 36 und mit einer Auswertungseinrichtung 38.

Die Erfassungseinrichtung 36 ist als optischer Sensor zum zeitaufgelösten Erfassen eines Abstands und Ausgeben von entsprechenden Abstandswerten ausgebildet. Die Erfassungseinrichtung 36 emittiert nacheinander mehrere aufgefächerte Lichtimpulse 40, die auf die Oberfläche 42 des in dem Aufnahmeraum 44 der Vorrichtung zur induktiven Erwärmung 32 aufgenommenen Metallwerkstoffs 34 zumindest teilweise reflektieren, und erfasst die reflektierten Lichtstrahlen. Aus den erfassten Lichtstrahlen bzw. aus der zeitlichen Verzögerung zwischen dem Zeitpunkt des Emittierens des Messimpulses und dem Zeitpunkt der Erfassung des entsprechenden, reflektierten Lichtstahls berechnet die Erfassungseinrichtung 36 den Abstand zur reflektierenden Oberfläche 42.

In Fig. 3 ist die Erfassungseinrichtung 36 an der Spritzschutzhaube 46 einer Beförderungseinrichtung 48 angeordnet und über ein Kabel 50 mit der Auswertungseinrichtung 38 verbunden.

Die Auswertungseinrichtung 38 ist dazu ausgebildet, auf Basis von durch die Erfassungseinrichtung 36 ausgegebenen Abstandswerten einen Füllstand der Vorrichtung zur induktiven Erwärmung 32 zu bestimmen und ein Signal mit einer Information über den bestimmten Füllstand auszugeben.

Das Signal ist zur Weiterverwendung in einem Regelungsvorgang geeignet, wobei die Zufuhr von Metallwerkstoff 34 an die Vorrichtung zur induktiven Erwärmung 32, hier mittels der Beförderungseinrichtung 48, unter Berücksichtigung des Füllstands angepasst wird.

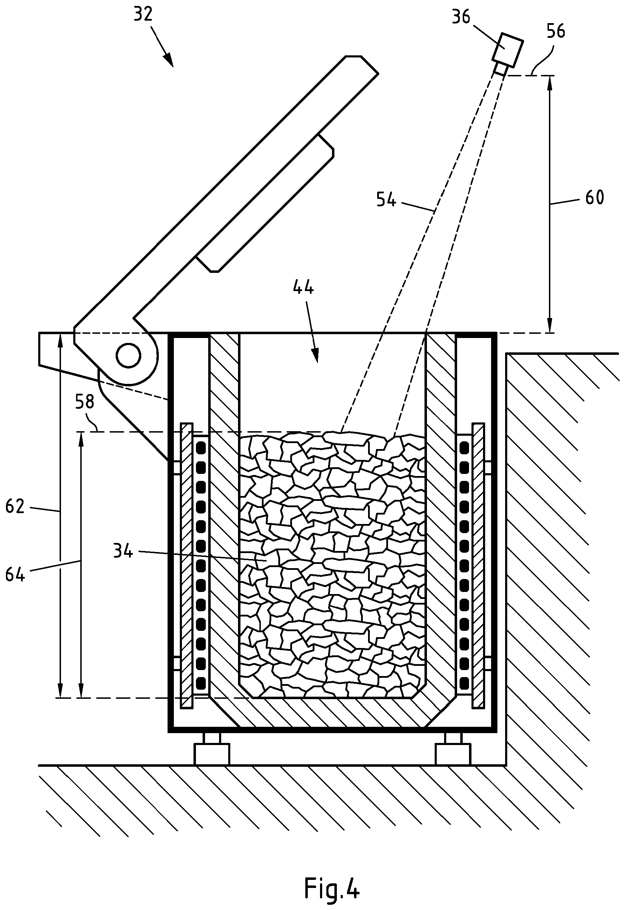

Fig. 4 zeigt eine Detailansicht der Vorrichtung 32 aus Fig. 3, wobei die erfassten Abstände schematisch dargestellt sind. Die Erfassungseinrichtung 36 ist über dem Aufnahmeraum 44 der Vorrichtung zur induktiven Erwärmung 32 angeordnet und kann somit Abstände erfassen, die der Gesamthöhe des Aufnahmeraums 44 entsprechen.

Durch Emittieren eines Messimpulses 54 und Erfassen eines entsprechenden, reflektierten Lichtstrahls kann der Abstand zwischen der Position 56, an der der Messimpuls emittiert wurde, und der Position 58, an der er auf der freien Oberfläche des durch den Aufnahmeraum 44 aufgenommenen Metallwerkstoffs 34 reflektiert wurde, ermittelt werden. Vorliegend wurde im Vorfeld (i) der Abstand 60 zwischen der Position 56, an der Messimpulse emittiert werden, und der Position des Rands der oberen Öffnung des Aufnahmeraums der Vorrichtung zur induktiven Erwärmung 32 und (ii) die Höhe 62 des Innenraums des Aufnahmeraums 44 hinterlegt, so dass anhand der erfassten Werte und durch einfaches Subtrahieren der Füllstand 64 bzw. die Füllhöhe im Aufnahmeraum 44 ermittelt werden kann.

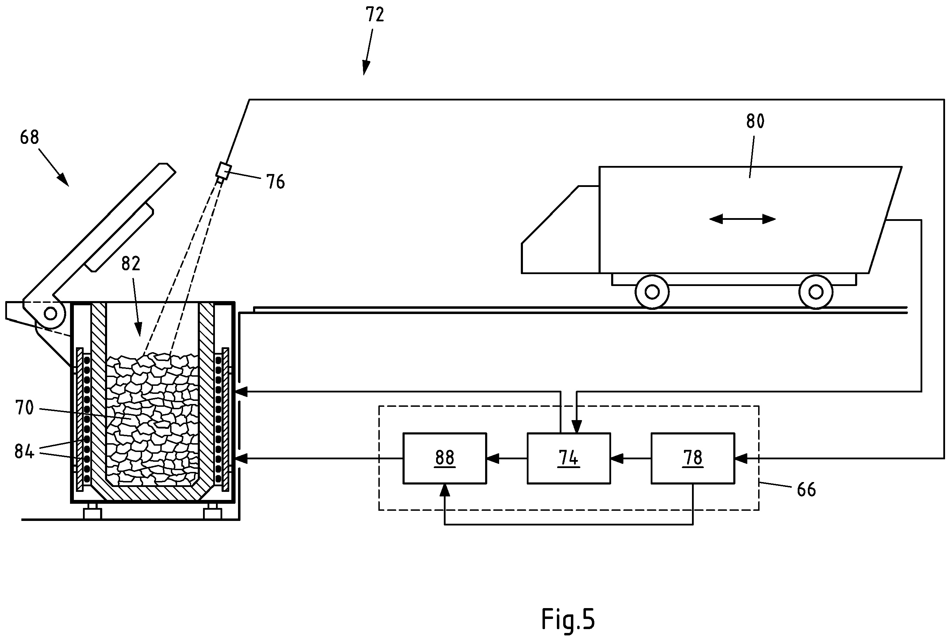

Fig. 5 zeigt eine Ausführungsform eines Steuerungssystems 66 für eine Vorrichtung 68 zur induktiven Erwärmung eines Metallwerkstoffs 70, mit einer Vorrichtung zur Überwachung 72 einer Vorrichtung 68 zur induktiven Erwärmung eines Metallwerkstoffs 70 und mit einer Regelungseinheit 74.

Die Vorrichtung zur Überwachung 72 weist eine Erfassungseinrichtung 76 und eine Auswertungseinrichtung 78 auf. Die Auswertungseinrichtung 78 ist mit der Regelungseinheit 74 für einen Datenaustausch verbunden.

Die Regelungseinheit 74 ist mit einer Beförderungseinrichtung 80 der Vorrichtung 68 zur induktiven Erwärmung verbunden, um die Zufuhr von Metallwerkstoff 70 an den Aufnahmeraum 82 der Vorrichtung 68 zur induktiven Erwärmung in Abhängigkeit von aus der Auswertungseinrichtung 78 empfangenen Informationen bzw. Signale adaptiv zu steuern. Daneben ist die Regelungseinheit 74 auch mit der Spule 84 der Vorrichtung 68 zur induktiven Erwärmung verbunden, um die dem aufgenommenen Metallwerkstoff 70 zugeführte Energie zu regeln.

Außerdem ist eine Steuerungseinrichtung 88 vorgesehen, die mit der Auswertungseinrichtung 78 verbunden ist. Diese Steuerungseinrichtung 88 entspricht der Steuerungseinrichtung, die standardgemäß bei Vorrichtungen zur induktiven Erwärmung vorgesehen ist. Die in der Fig. 5 gezeigte Konfiguration könnte auch zum Nachrüsten einer bereits vorhandenen Vorrichtung 68 zur induktiven Erwärmung durch Ergänzen mit einem Steuerungs- bzw. Regelungssystem 66 dienen.

Die Steuerungseinrichtung 88 ist dazu eingerichtet, sämtliche Betriebsparameter der Vorrichtung 68 zur induktiven Erwärmung einzustellen und auch Istwerte für diese Betriebsparameter zu erfassen. Durch die jeweiligen Verbindungen der Auswertungseinrichtung 78, der Regelungseinheit 74 und der Steuerungseinrichtung 88 kann ein Bestimmen des Vorliegens einer Brückenbildung in dem Metallwerkstoff 70 anhand sowohl von durch die Erfassungseinrichtung 76 ausgegebenen Abstandswerten zum Füllstand des Aufnahmeraums 82 als auch auf Werte für Betriebsparameter zurückgegriffen werden.

## Patentansprüche

1. Vorrichtung zur Überwachung (30, 72) einer Vorrichtung zur induktiven Erwärmung (2, 32, 68) eines Metallwerkstoffs (4, 34, 70), mit einer Erfassungseinrichtung (36, 76) und mit einer Auswertungseinrichtung (38, 78), **dadurch gekennzeichnet,**
- **dass** die Erfassungseinrichtung (36, 76) ein optischer Sensor zum Erfassen eines Abstands ist,
- **dass** die Erfassungseinrichtung ein LIDAR-Sensor ist,
- wobei die Erfassungseinrichtung (36, 76) dazu eingerichtet ist, Strahlen im Ultraviolett-, Infrarot- oder im sichtbaren Bereich des Lichts zu emittieren, und einen Abstandswert für den zu messenden Abstand bei einem bestimmten Messzeitpunkt auf Basis der Laufzeit des Messimpulses zwischen Emittieren und Empfangen nach Reflektion zu bestimmen, und
- **dass** die Auswertungseinrichtung (38, 78) dazu eingerichtet ist, auf Basis von einem durch die Erfassungseinrichtung (36, 76) erfassten Abstand einen Füllstand (64) der Vorrichtung zur induktiven Erwärmung (2, 32, 68) zu bestimmen und ein entsprechendes Signal auszugeben,
- wobei mehrere Abstandswerte berücksichtigt werden, die mehreren, zum selben Zeitpunkt erfassten Abständen entsprechen, um eine Brückenbildung in dem durch die Vorrichtung zur induktiven Erwärmung (2, 32, 68) aufgenommenen Metallwerkstoff (4, 34, 70) zu erkennen, und
- wobei das Signal zur Weiterverwendung in einem Regelungsvorgang für die Zufuhr von Metallwerkstoff (4, 34, 70) an die Vorrichtung zur induktiven Erwärmung (2, 32, 68) geeignet ist.

2. Vorrichtung nach Anspruch 1,
**dadurch gekennzeichnet, dass**
die Erfassungseinrichtung (36, 76) zum zeitaufgelösten Erfassen eines Abstandes und Ausgeben von entsprechenden Abstandswerten eingerichtet ist, und dass die Auswertungseinrichtung (38, 78) dazu eingerichtet ist, auf Basis von durch die Erfassungseinrichtung (36, 76) ausgegebenen Abstandswerten eine zeitliche Entwicklung des Füllstandes (64) nachzuvollziehen, und das Signal entsprechend anzupassen.

3. Vorrichtung nach Anspruch 1 oder 2,
**dadurch gekennzeichnet, dass**
der Füllstand (64) für einen bestimmten Zeitpunkt einem Abstand (60) zwischen einer relativ zur Vorrichtung zur induktiven Erwärmung (2, 32, 68) festen Referenzposition und einer Position an der freien Oberfläche des durch die Vorrichtung zur induktiven Erwärmung (2, 32, 68) aufgenommenen Metallwerkstoffs (4, 34, 70) zu dem bestimmten Zeitpunkt entspricht.

4. Vorrichtung nach einem der Ansprüche 1 bis 3,
**dadurch gekennzeichnet, dass**
die Auswertungseinrichtung (38, 78) für einen Zugriff auf mindestens einen voreingestellten und/oder erfassten Wert für einen Betriebsparameter der Vorrichtung zur induktiven Erwärmung (2, 32, 68) eingerichtet ist, und dass die Auswertungseinrichtung (38, 78) dazu eingerichtet ist, eine Brückenbildung in dem durch die Vorrichtung zur induktiven Erwärmung (2, 32, 68) aufgenommenen Metallwerkstoff (4, 34, 70) unter Berücksichtigung einer zeitlichen Entwicklung des Füllstandes (64) und von dem mindestens einen voreingestellten und/oder erfassten Wert für einen Betriebsparameter der Vorrichtung zur induktiven Erwärmung (2, 32, 68) zu erkennen.

5. Vorrichtung nach Anspruch 4,
**dadurch gekennzeichnet, dass**
das durch die Auswertungseinrichtung (38, 78) ausgegebene Signal zur Weiterverwendung durch eine Warneinrichtung geeignet ist, und dass die Warneinrichtung zum Ausgeben eines Warnsignals ausgebildet ist, wenn das Signal eine Information über ein positives Erkennen einer Brückenbildung aufweist.

6. Vorrichtung nach einem der Ansprüche 1 bis 5,
**dadurch gekennzeichnet, dass**
die Erfassungseinrichtung (36, 76) an einer Beförderungseinrichtung (8, 48, 80), insbesondere an einem Spritzschutz (46) einer Beförderungseinrichtung (8, 48, 80) zum Zuführen von Metallwerkstoff (4, 34, 70) zur Vorrichtung zur induktiven Erwärmung (2, 32, 68) angeordnet ist.

7. Verfahren zum automatischen Beladen einer Vorrichtung zur induktiven Erwärmung (2, 32, 68) eines Metallwerkstoffs (4, 34, 70),
**dadurch gekennzeichnet,**
- **dass** durch eine als LIDAR-Sensor ausgebildete Erfassungseinrichtung Strahlen im Ultraviolett-, Infrarot- oder im sichtbaren Bereich des Lichts emittiert werden und ein Abstand zeitaufgelöst erfasst wird,
- wobei ein Abstandswert für den zu messenden Abstand bei einem bestimmten Messzeitpunkt auf Basis der Laufzeit des Messimpulses zwischen Emittieren und Empfangen nach Reflektion bestimmt wird,
- **dass** entsprechende Abstandswerte ausgegeben werden, und
- **dass** auf Basis von den Abstandswerten ein eine Information über einen Füllstand (64) der Vorrichtung zur induktiven Erwärmung (2, 32, 68) aufweisendes Signal ausgegeben wird,
- wobei mehrere Abstandswerte berücksichtigt werden, die mehreren, zum selben Zeitpunkt erfassten Abständen entsprechen, um eine Brückenbildung in dem durch die Vorrichtung zur induktiven Erwärmung (2, 32, 68) aufgenommenen Metallwerkstoff (4, 34, 70) zu erkennen, und
- **dass** die Zufuhr von Metallwerkstoff (4, 34, 70) an die Vorrichtung zur induktiven Erwärmung (2, 32, 68) in Abhängigkeit von der Information über einen Füllstand (64) gesteuert bzw. geregelt wird.

8. Verfahren nach Anspruch 7,
**dadurch gekennzeichnet, dass**
ein zumindest teilweises Beladen der Vorrichtung zur induktiven Erwärmung (2, 32, 68) durch eine Beförderungseinrichtung (8, 48, 80), insbesondere durch einen Chargierwagen oder durch eine verfahrbare Beförderungsrinne, in Abhängigkeit von der Information über einen Füllstand (64) der Vorrichtung zur induktiven Erwärmung (2, 32, 68) zumindest vorübergehend unterbunden oder fortgeführt wird.

9. Verfahren nach Anspruch 8,
**dadurch gekennzeichnet, dass**
das zumindest teilweise Beladen gestartet oder wiederaufgenommen wird, wenn der Füllstand (64) einen vorbestimmten Untergrenzwert unterschreitet, und/oder dass das zumindest teilweise Beladen pausiert oder gestoppt wird, wenn der Füllstand (64) einen vorbestimmten Obergrenzwert überschreitet.

10. Verfahren nach einem der Ansprüche 7 bis 9,
**dadurch gekennzeichnet, dass**
auf Basis von den Abstandswerten bestimmt wird, ob der Füllstand (64) über eine vorbestimmte Zeitdauer im Wesentlichen abnimmt, konstant bleibt oder zunimmt, und dass auf Basis von der zeitlichen Entwicklung des Füllstands (64) eine Brückenbildung in dem durch die Vorrichtung zur induktiven Erwärmung (2, 32, 68) aufgenommenen Metallwerkstoff (4, 34, 70) erkannt wird.

11. Verfahren nach einem der Ansprüche 7 bis 10,
**dadurch gekennzeichnet, dass**
in Abhängigkeit von der zeitlichen Entwicklung des Füllstands (64) voreingestellte und/oder erfasste Werte für mindestens einen Betriebsparameter der Vorrichtung zur induktiven Erwärmung (2, 32, 68) abgerufen und für das Erkennen einer Brückenbildung berücksichtigt werden.

12. Verfahren nach einem der Ansprüche 7 bis 11,
**dadurch gekennzeichnet, dass,**
wenn das Signal eine Information über ein positives Erkennen einer Brückenbildung aufweist, die Zufuhr von Metallwerkstoff (4, 34, 70) an die Vorrichtung zur induktiven Erwärmung (2, 32, 68) zumindest vorübergehend verringert oder unterbunden wird und/oder ein Warnsignal ausgegeben wird.

13. Steuerungssystem für eine Vorrichtung zur induktiven Erwärmung (2, 32, 68) eines Metallwerkstoffs (4, 34, 70) mit einer Vorrichtung (30, 72) nach einem der Ansprüche 1 bis 6 und mit einer Regelungseinheit (74),
**dadurch gekennzeichnet, dass**
die Regelungseinheit (74) dazu eingerichtet ist, die Zufuhr von Metallwerkstoff (4, 34, 70) an die Vorrichtung zur induktiven Erwärmung (2, 32, 68) in Abhängigkeit von einem Füllstand (64) der Vorrichtung zur induktiven Erwärmung (2, 32, 68) zu regeln bzw. zu steuern

14. Steuerungssystem nach Anspruch 13,
**dadurch gekennzeichnet, dass**
die Regelungseinheit (74) dazu eingerichtet ist, ein zumindest teilweises Beladen der Vorrichtung zur induktiven Erwärmung (2, 32, 68) durch eine Beförderungseinrichtung (8, 48, 80), insbesondere durch einen Chargierwagen oder durch eine verfahrbare Beförderungsrinne, zu veranlassen, wenn der Füllstand (64) einen vorbestimmten Untergrenzwert unterschreitet, und/oder zu pausieren oder zu stoppen, wenn der Füllstand einen vorbestimmten Obergrenzwert überschreitet.

## Claims

1. A device (30, 72) for monitoring an apparatus (2, 32, 68) for the inductive heating of a metallic material (4, 34, 70)*,* comprising a sensing means (36, 76) and an evaluation means (38, 78),
**characterised in that**,
- the sensing means (36, 76) is an optical sensor for detecting a distance,
- wherein the sensing means is a LIDAR sensor,
- wherein the sensing means (36, 76) is configured to emit beams in the ultraviolet, infrared or visible spectrum of light, and to determine a distance value for the distance to be measured at a specific measurement time based on the transit time of the measurement pulse between emission and reception following reflection, and
- wherein the evaluation means (38, 78) is configured to determine a fill level (64) of the inductive heating apparatus (2, 32, 68) on the basis of a distance detected by the sensing means (36, 76) and to output a corresponding signal,
- wherein a plurality of distance values, corresponding to a plurality of distances detected at the same time, are taken into account in order to detect bridging in the metallic material (4, 34, 70) accommodated in the inductive heating apparatus (2, 32, 68), and
- wherein the signal is suitable for further use in a regulation process for the supply of metallic material (4, 34, 70) to the inductive heating apparatus (2, 32, 68).

2. Device according to claim 1,
**characterised in that**
the sensing means (36, 76) is configured to detect a distance on a time-resolved basis and to output corresponding distance values, and that the evaluation means (38, 78) is configured to track the temporal development of the fill level (64) on the basis of distance values output by the sensing means (36, 76), and to adjust the signal accordingly.

3. Device according to claim 1 or 2,
**characterised in that**
the fill level (64) at a specific point in time corresponds to a distance (60) between a reference position fixed relative to the inductive heating apparatus (2, 32, 68) and a position on the free surface of the metallic material (4, 34, 70) accommodated in the inductive heating apparatus (2, 32, 68) at that specific point in time.

4. Device according to any one of claims 1 to 3,
**characterised in that**
the evaluation means (38, 78) is configured to access at least one preset and/or detected value for an operating parameter of the inductive heating apparatus (2, 32, 68), and that the evaluation means (38, 78) is configured to detect bridging in the metallic material (4, 34, 70) accommodated in the inductive heating apparatus (2, 32, 68), taking into account the temporal development of the fill level (64) and the at least one preset and/or detected value for an operating parameter of the inductive heating apparatus (2, 32, 68).

5. Device according to claim 4,
**characterised in that**
the signal output by the evaluation means (38, 78) is suitable for further use by a warning device, and that the warning device is configured to output a warning signal when the signal contains information indicating that bridging has been detected.

6. Device according to any one of claims 1 to 5,
**characterised in that**
the sensing means (36, 76) is mounted on a conveying device (8, 48, 80), in particular on a splash guard (46) of a conveying device (8, 48, 80) for feeding metallic material (4, 34, 70) to the inductive heating apparatus (2, 32, 68).

7. A method for automatically loading an inductive heating apparatus (2, 32, 68) with a metallic material (4, 34, 70),
**characterised in that**
- a sensing means designed as a LIDAR sensor emits beams in the ultraviolet, infrared or visible spectrum of light and a distance is detected on a time-resolved basis,
- wherein a distance value for the distance to be measured at a specific measurement time is determined on the basis of the transit time of the measurement pulse between emission and reception following reflection,
- wherein corresponding distance values are output,
- wherein, on the basis of the distance values, a signal containing information about a fill level (64) of the inductive heating apparatus (2, 32, 68) is output,
- wherein a plurality of distance values, corresponding to a plurality of distances detected at the same time, are taken into account in order to detect bridging in the metallic material (4, 34, 70) accommodated in the inductive heating apparatus (2, 32, 68), and
- wherein the supply of metallic material (4, 34, 70) to the inductive heating apparatus (2, 32, 68) is controlled or regulated as a function of information relating to a fill level (64).

8. Method according to claim 7,
**characterised in that**
at least partial loading of the inductive heating apparatus (2, 32, 68) by a conveying device (8, 48, 80), in particular by a charging trolley or a movable conveyor trough, is at least temporarily prevented or continued depending on the information relating to a fill level (64) of the inductive heating apparatus (2, 32, 68).

9. Method according to claim 8,
**characterised in that**
the at least partial loading is started or resumed when the fill level (64) falls below a predetermined lower limit, and/or that the at least partial loading is paused or stopped when the fill level (64) exceeds a predetermined upper limit.

10. Method according to any one of claims 7 to 9,
**characterised in that**
it is determined, on the basis of the distance values, whether the fill level (64) substantially decreases, remains constant or increases over a predetermined period of time, and that, on the basis of the temporal development of the fill level (64), bridging in the metallic material (4, 34, 70) contained in the inductive heating apparatus (2, 32, 68) is detected.

11. Method according to any one of claims 7 to 10,
**characterised in that**
depending on the temporal development of the fill level (64), preset and/or detected values for at least one operating parameter of the inductive heating apparatus (2, 32, 68) are retrieved and taken into account for the detection of bridging.

12. Method according to any one of claims 7 to 11,
**characterised in that**,
if the signal contains information indicating that bridging has been detected, the supply of metallic material (4, 34, 70) to the inductive heating apparatus (2, 32, 68) is at least temporarily reduced or stopped and/or a warning signal is emitted.

13. Control system for an inductive heating apparatus (2, 32, 68) for heating a metallic material (4, 34, 70), comprising a device (30, 72) according to any one of claims 1 to 6 and a control unit (74),
**characterised in that**
the control unit (74) is configured to regulate or control the supply of metallic material (4, 34, 70) to the inductive heating apparatus (2, 32, 68) as a function of a fill level (64) of the inductive heating apparatus (2, 32, 68)

14. Control system according to claim 13,
**characterised in that**
the control unit (74) is configured to initiate at least partial loading of the inductive heating apparatus (2, 32, 68) by a conveying device (8, 48, 80), in particular by a charging trolley or a movable conveyor trough, when the fill level (64) falls below a predetermined lower limit, and/or to pause or stop the at least partial loading when the fill level exceeds a predetermined upper limit.

## Revendications

1. Dispositif de surveillance (30, 72) d'un dispositif de chauffage par induction (2, 32, 68) d'un matériau métallique (4, 34, 70)*,* comprenant un dispositif de détection (36, 76) et un dispositif d'évaluation (38, 78),
**caractérisé en ce que**
- le dispositif de détection (36, 76) est un capteur optique destiné à détecter une distance,
- le dispositif de détection est un capteur LIDAR,
- le dispositif de détection (36, 76) étant conçu pour émettre des faisceaux dans le domaine ultraviolet, infrarouge ou visible de la lumière, et pour déterminer une valeur de distance correspondant à la distance à mesurer à un instant de mesure donné, sur la base du temps de propagation de l'impulsion de mesure entre son émission et sa réception après réflexion, et
- le dispositif d'évaluation (38, 78) est conçu pour déterminer, sur la base d'une distance détectée par le dispositif de détection (36, 76), un niveau de remplissage (64) du dispositif de chauffage par induction (2, 32, 68) et pour émettre un signal correspondant,
- plusieurs valeurs de distance étant prises en compte, qui correspondent à plusieurs distances détectées simultanément, afin de détecter la formation d'un pont dans le matériau métallique (4, 34, 70) contenu dans le dispositif de chauffage par induction (2, 32, 68), et
- le signal étant adapté pour être utilisé dans un processus de régulation de l'alimentation en matériau métallique (4, 34, 70) vers le dispositif de chauffage par induction (2, 32, 68).

2. Dispositif selon la revendication 1,
**caractérisé en ce que**
le dispositif de détection (36, 76) est conçu pour détecter une distance avec une résolution temporelle et pour fournir des valeurs de distance correspondantes, et que le dispositif d'évaluation (38, 78) est conçu pour suivre l'évolution dans le temps du niveau de remplissage (64) sur la base des valeurs de distance fournies par le dispositif de détection (36, 76), et pour adapter le signal en conséquence.

3. Dispositif selon la revendication 1 ou 2,
**caractérisé en ce que**
le niveau de remplissage (64) à un instant donné correspond à une distance (60) entre une position de référence fixe par rapport au dispositif de chauffage par induction (2, 32, 68) et une position située à la surface libre du matériau métallique (4, 34, 70) contenu dans le dispositif de chauffage par induction (2, 32, 68) à ce moment précis.

4. Dispositif selon l'une des revendications 1 à 3,
**caractérisé en ce que**
le dispositif d'évaluation (38, 78) est conçu pour accéder à au moins une valeur préréglée et/ou détectée correspondant à un paramètre de fonctionnement du dispositif de chauffage par induction (2, 32, 68), et **en ce que** le dispositif d'évaluation (38, 78) est conçu pour détecter la formation d'un pont dans le matériau métallique (4, 34, 70) contenu dans le dispositif de chauffage par induction (2, 32, 68), en tenant compte de l'évolution dans le temps du niveau de remplissage (64) et de ladite au moins une valeur préréglée et/ou détectée pour un paramètre de fonctionnement du dispositif de chauffage par induction (2, 32, 68).

5. Dispositif selon la revendication 4,
**caractérisé en ce que**
le signal émis par le dispositif d'évaluation (38, 78) est adapté à une utilisation ultérieure par un dispositif d'alerte, et que le dispositif d'alerte est conçu pour émettre un signal d'alerte lorsque le signal contient une information indiquant la détection avérée d'une formation de pont.

6. Dispositif selon l'une des revendications 1 à 5,
**caractérisé en ce que**
le dispositif de détection (36, 76) est monté sur un dispositif de transport (8, 48, 80), en particulier sur un pare-éclaboussures (46) d'un dispositif de transport (8, 48, 80) destiné à acheminer un matériau métallique (4, 34, 70) vers le dispositif de chauffage par induction (2, 32, 68).

7. Procédé de chargement automatique d'un dispositif de chauffage par induction (2, 32, 68) d'un matériau métallique (4, 34, 70),
**caractérisé en ce que**
- un dispositif de détection conçu comme un capteur LIDAR émet des faisceaux dans le domaine ultraviolet, infrarouge ou visible de la lumière et détecte une distance avec une résolution temporelle,
- une valeur de distance correspondant à la distance à mesurer à un instant de mesure donné étant déterminée sur la base du temps de propagation de l'impulsion de mesure entre l'émission et la réception après réflexion,
- que des valeurs de distance correspondantes sont fournies, et
- qu'un signal contenant des informations sur le niveau de remplissage (64) du dispositif de chauffage par induction (2, 32, 68) est émis sur la base des valeurs de distance,
- plusieurs valeurs de distance étant prises en compte, lesquelles correspondent à plusieurs distances détectées au même instant, afin de détecter la formation d'un pont dans le matériau métallique (4, 34, 70) contenu dans le dispositif de chauffage par induction (2, 32, 68), et
- que l'alimentation en matériau métallique (4, 34, 70) vers le dispositif de chauffage par induction (2, 32, 68) est commandée ou régulée en fonction des informations relatives à un niveau de remplissage (64).

8. Procédé selon la revendication 7,
**caractérisé en ce que**
le chargement, au moins partiel, du dispositif de chauffage par induction (2, 32, 68) par un dispositif de transport (8, 48, 80), en particulier par un chariot de chargement ou par une goulotte de transport mobile, est au moins temporairement interrompu ou poursuivi en fonction des informations relatives au niveau de remplissage (64) du dispositif de chauffage par induction (2, 32, 68).

9. Procédé selon la revendication 8,
**caractérisé en ce que**
le chargement au moins partiel est lancé ou repris lorsque le niveau de remplissage (64) passe en dessous d'une valeur limite inférieure prédéfinie, et/ou que le chargement au moins partiel est mis en pause ou arrêté lorsque le niveau de remplissage (64) dépasse une valeur limite supérieure prédéfinie.

10. Procédé selon l'une des revendications 7 à 9,
**caractérisé en ce que**
on détermine, sur la base des valeurs de distance, si le niveau de remplissage (64) diminue sensiblement, reste constant ou augmente pendant une durée prédéterminée, et qu'on détecte, sur la base de l'évolution dans le temps du niveau de remplissage (64), la formation d'un pont dans le matériau métallique (4, 34, 70) contenu dans le dispositif de chauffage par induction (2, 32, 68).

11. Procédé selon l'une des revendications 7 à 10,
**caractérisé en ce que**
en fonction de l'évolution dans le temps du niveau de remplissage (64), des valeurs préréglées et/ou détectées pour au moins un paramètre de fonctionnement du dispositif de chauffage par induction (2, 32, 68) sont consultées et prises en compte pour la détection d'une formation de pont.

12. Procédé selon l'une des revendications 7 à 11,
**caractérisé en ce que**
lorsque le signal indique la détection d'une formation de pont, l'alimentation en matériau métallique (4, 34, 70) vers le dispositif de chauffage par induction (2, 32, 68) est réduite ou interrompue, au moins temporairement, et/ou un signal d'alerte est émis.

13. Système de commande pour un dispositif de chauffage par induction (2, 32, 68) d'un matériau métallique (4, 34, 70), comprenant un dispositif (30, 72) selon l'une des revendications 1 à 6 et une unité de régulation (74),
**caractérisé en ce que**
l'unité de régulation (74) est agencée pour réguler ou commander l'alimentation en matériau métallique (4, 34, 70) vers le dispositif de chauffage par induction (2, 32, 68) en fonction d'un niveau de remplissage (64) du dispositif de chauffage par induction (2, 32, 68)

14. Système de commande selon la revendication 13,
**caractérisé en ce que**
l'unité de régulation (74) est agencée pour déclencher un chargement au moins partiel du dispositif de chauffage par induction (2, 32, 68) par un dispositif de transport (8, 48, 80), en particulier par un chariot de chargement ou par une goulotte de transport mobile, lorsque le niveau de remplissage (64) passe en dessous d'une valeur limite inférieure prédéterminée, et/ou de le mettre en pause ou de l'arrêter lorsque le niveau de remplissage dépasse une valeur limite supérieure prédéterminée.
